# EUROPEAN PATENT APPLICATION

(11) **EP 2 105 718 A1**
(43) Date of publication of application: **30.09.2009**
(21) Application number: 08425204.8
(22) Date of filing: 28.03.2008
(51) Int. Cl.: G01J 3/02, G01J 3/10

(54) **High precision photodetector device**

(71) Applicant: Maroche S.r.l., 92024 Canicatti, Agrigento (IT)
(72) Inventor: Marcellino, Giuseppe, 95040 Motta Sant'Anastasia, Catania (IT)
(74) Representative: De Gregori, Antonella

(57) **Abstract**

A photodetector device (10) comprising at least one light source (11) coupled with at least one optical filter (12) for the transmission of substantially one wavelength along a predetermined direction, the optical filter (12) being coupled with at least one signal transducer (16) for the transformation of an optical signal into an electrical signal, the at least one light source (11) and the at least one signal transducer (16) being connected to a central processing unit (21), **characterised in that** the at least one optical filter (12) is arranged in a fixed position relative to the at least one light source (11).

## Description

The present invention refers to a high precision photodetector device.

Nowadays, for example in applications for medical purposes in which it is necessary to determine the presence of a particular substance in a solution or mixture, it is known to use photodetectors, also known as photometers.

Such particular applications foresee for example that the solution or mixture to be examined reacts with suitable enzymatic substances from which the reaction with the detected substance result in a changing of colour of the solution or mixture, observable through a photometer.

From such a reaction it is also possible to obtain further information, such as for example the initial concentration of the substance to be detected, by examining through the photometer a possible change of colour as well as the tone of the colour obtained after the reaction.

The photodetector devices used in such applications, operate through the detection, possibly over time, of the wavelength of the radiation coming from the sample, the colour and tone of which one wishes to determine. Such devices generally comprise a light source that illuminates the sample through a plurality of optical filters each one capable of substantially letting through only one different wavelength.

According to the particular application, and therefore to the range of colours that are to be analysed, an optical filter is selected through which the radiation coming from the light source and projected onto the sample is selected.

In this way, the wavelength that produces the biggest contrast with the colour to be detected is selected. For example, to examine a red sample, it is particularly advisable to illuminate the sample with a green light. For this purpose, an optical filter capable of letting through almost exclusively the wavelength relative to the colour green is therefore used.

The photodetector device also comprises a plurality of transducers capable of transforming an input optical signal into an electrical signal, through which it detects the outcoming signal from the suitably illuminated sample. Such an analysis, if extended over time, is also capable of measuring possible variations of tones of the colour detected and therefore, in the particular application of the medical case described above, the reactive behaviour of the solution or mixture over time.

The photodetector devices known today suffer from different problems that overall reduce the possibility of application thereof for precise measuring, and for particular precise measurements extended over time.

First of all, such known devices use incandescent light sources, like halogen lights for example, that develop very high temperatures while the device is functioning. This can cause both damage to the device itself, as well as an alteration in the enzymatic reaction, possibly catalysing and intensifying it, thus also distorting the measurements taken.

In addition, the measurements taken over time are also altered by a further variable, i.e. by the variation over time of the radiating capacity of a halogen type light source due to the opacification of the glass of such light bulbs in the course of their life.

Moreover, the single optical filters of known devices are arranged on mobile supporting means that allow from time to time the positioning of the optical filter necessary for the particular application, between the sample and the light source. On the other hand, such a mobile structure can create imprecision, because even the slightest displacement between the positioning of the optical filter and the direction of main radiation of the light source can lead to alterations in the measurement taken, since the filter is unable to transmit the maximum intensity of the passing wavelength.

Last but not least, due to their low precision, known devices are often unable to detect signals in the ultraviolet field (about 380 - 200 nm).

The purpose of the present invention is to avoid the aforementioned drawbacks and in particular to make a photodetector device that offers high precision and reliability also for measurements extended over time. Another purpose of the present invention is to provide a photodetector device able to precisely detect signals in the ultraviolet field.

A further purpose of the present invention is to make a high precision photodetector device having a simple structure and allowing a cost-efficient production of the same.

These and other purposes according to the present invention are achieved by providing a photodetector device as outlined in claim 1.

Further characteristics of the photodetector device are the object of the dependent claims.

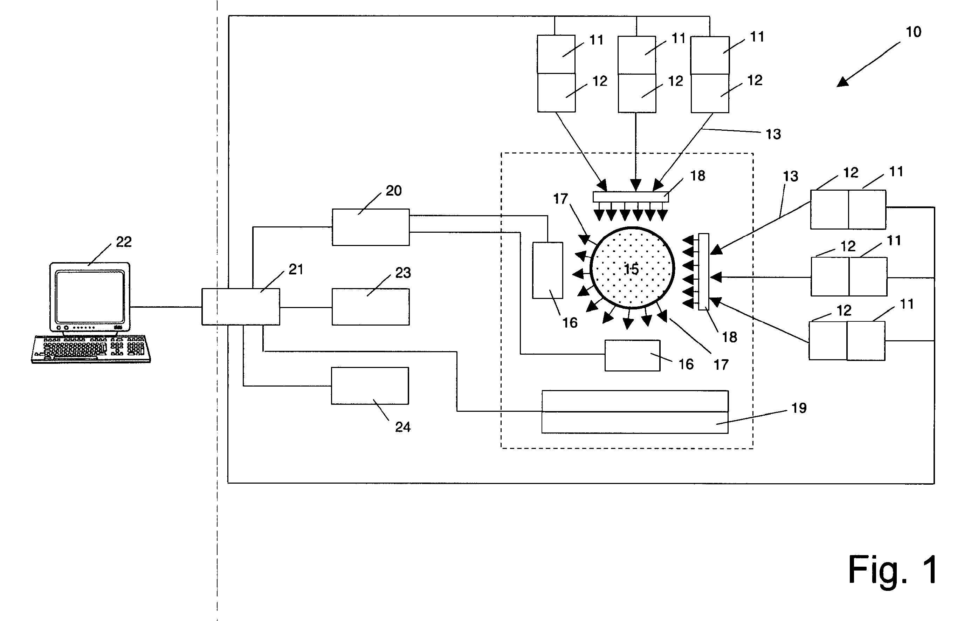

The characteristics and the advantages of a photodetector device according to the present invention shall become clearer from the following description, given as an example and not for limiting purposes, referring to the attached schematic drawings in which figure 1 is a schematic block diagram of the photodetector device according to the present invention.

With reference to the single figure, a photodetector device is shown, wholly indicated with 10.

Such a device 10 comprises a plurality of light sources 11, each associated with a different optical filter 12, **characterised in that** it transmits a certain wavelength.

According to the present invention such optical filters 12 are arranged in a fixed position relative to the respective light source 11 and in particular stably aligned in a way so as to maximise the quantity of light striking the optical filter 12. According to a preferred embodiment of the present invention, every light source 11 associated with a particular optical filter 12 is an LED (light emitting diode) that emits radiation with wavelengths substantially in the vicinity of the passing wavelength of the relative filter 12.

For example it is possible to use an LED 11 that emits red light associated with a filter 12 with a passing wavelength equal to 620 nm, an LED 11 that emits yellow light associated with a filter 12 with a passing wavelength equal to 578 nm, an LED 11 that emits green light associated with a filter 12 with a passing wavelength equal to 546 nm, an LED 11 that emits blue light associated with a filter 12 with a passing wavelength equal to 505 nm, and an LED that emits ultraviolet radiation associated with a filter 12 with a passing wavelength equal to 405 or 340 nm. The use of LEDs as light sources 11 also offers the advantage of a reduced heat generation and a higher lifespan of the source without there being alterations in the light emission over time, thus making it possible to carry out precise detections even extended over long time periods.

Coming out from the optical filters 12, there are associated means 18 for channelling the transmitted light 13 so that it is conveyed towards a recipient 14 containing the solution or mixture 15 to be examined.

In a preferred embodiment of the invention, such a recipient 14 is made out of a light pervious material, preferably made out of glass, and having a tubular shape.

Following the illumination of the light pervious recipient 14, and therefore of the solution or mixture 15 to be analysed, with one or more appropriate wavelengths, the radiation 17 emerging from the sample 15 is detected through a plurality of transducers 16 capable of transforming the inputting optical signal into an electrical signal.

In particular the transducers 16 used are photodiodes capable of detecting wavelengths in the range between 320 nm and 800 nm.

In order to keep the temperature of the sample substantially constant, a heat sink 19, like for example a Peltier cell, is preferably associated with the system made up of the recipient 14 and transducers 16.

The transducers 16 are connected to a data acquisition card 20 that operates as a preamplifier, amplifying the signal coming from the transducers 16. Such a provision proves to be particularly useful in the case of detections made through the radiation of the sample with ultraviolet beam signals, which are generally characterised by a low intensity.

Through the acquisition card 20 with a preamplifier, such weak signals are brought to levels so as to be able to be processed by the central processing unit 21 placed downstream.

Such a processing unit 21 receives in input the signals detected and determines the colouring of the sample detected, through the execution of a suitable computer programme.

Furthermore, the central processing unit 21 is connected to an interface 22, for entering and reading data, and through which the single parameters, such as colour and measuring time, can be set for the particular detection.

For this purpose the central processing unit 21 is connected to the single light sources 11 and controls them in their switching on and off according to the aforementioned set parameters.

Last but not least, the central processing unit 21 is preferably connected to a valve 23 and to a dilutor 24.

From the description that has been made, the characteristics of the device, object of the present invention, are clear, just as the relative advantages are also clear.

Finally, it is clear that the device thus conceived can undergo numerous modifications and variants, all of which are covered by the invention; moreover, all the details are replaceable with technically equivalent elements.

In practice, the materials used as well as the sizes, can be whatever according to the technical requirements.

## Claims

1. Photodetector device (10) comprising at least one light source (11) coupled with at least one optical filter (12) for the transmission of substantially one wavelength along a predetermined direction, said optical filter (12) having at least one signal transducer (16) coupled with it for the transformation of an optical signal into an electrical signal, said at least one light source (11) and said at least one signal transducer (16) being connected to a central processing unit (21), **characterised in that** said at least one optical filter (12) is arranged in a fixed position relative to said at least one light source (11).

2. Photodetector device (10) according to claim 1 **characterised in that** said at least one light source is an LED (light emitting diode).

3. Photodetector device (10) according to claim 2 **characterised in that** said at least one LED (11) emits a range of wavelengths substantially in the vicinity of the passing wavelength of said at least one optical filter (12) fixedly associated with said LED (11).

4. Photodetector device (10) according to one of claims 1 to 3 **characterised in that** a data acquisition card (20) suitable for amplifying the output signal from said at least one transducer (16) is placed between said at least one signal transducer (16) and said central processing unit (21).

5. Photodetector device (10) according to any one of the previous claims **characterised in that** said at least one signal transducer (16) is a photodiode.

6. Photodetector device (10) according to any one of the previous claims **characterised in that** it comprises at least one heat sink (19) placed close to said at least one signal transducer (16).

7. Photodetector device (10) according to claim 6 **characterised in that** said at least one heat sink (19) is a Peltier cell.

8. Photodetector device (10) according to any one of the previous claims **characterised in that** downstream of said at least one optical filter (12) a light conveying device (18) is placed to direct the transmitted light along said predetermined direction.

9. Photodetector device (10) according to any one of the previous claims **characterised in that** said central processing unit (21) is connected to a valve (23).

10. Photodetector device (10) according to any one of the previous claims **characterised in that** said central processing unit (21) is connected to a dilutor (24).

11. Photodetector device (10) according to any one of the previous claims **characterised in that** said central processing unit (21) is connected to an interface (22) for entering and reading data.

12. Photodetector device (10) according to claim 11 **characterised in that** said central processing unit (21) comprises computer means for controlling the switching on and off of a suitable light source (11) based upon data entered through said interface (22).
